# EUROPÄISCHE PATENTSCHRIFT

(11) **EP 0 553 489 B1**
(45) Veröffentlichungstag und Bekanntmachung des Hinweises auf die Patenterteilung: **03.09.1997**
(21) Anmeldenummer: 92122018.2
(22) Anmeldetag: 24.12.1992
(51) Int. Cl.: F16L 9/12, F16L 11/12, F16L 9/133

(54) **Kraftfahrzeug-Rohrleitung aus einem einschichtigen oder einem mehrschichtigen extrudierten Kunststoffrohr**
Mono- or multilayered plastic vehicle conduit fabricated by coextrusion
Conduite pour automobiles en matière plastique en mono- ou multi-couches fabriquée par coextrusion

(30) Priorität: 29.01.1992 DE 4202397
(43) Veröffentlichungstag der Anmeldung: 04.08.1993
(73) Patentinhaber: Technoflow Tube-Systems GmbH, 34277 Fuldabrück (DE)
(72) Erfinder: Brunnhofer, Erwin, Dipl.-Ing., W-3501 Guxhagen (DE)
(74) Vertreter: Honke, Manfred, Dr.-Ing.

(56) Entgegenhaltungen:
- EP-A- 553 500
- EP-A- 0 445 706
- FR-A- 2 454 039

## Beschreibung

Die Erfindung betrifft die Verwendung einer Rohrleitung aus einem einschichtigen oder einem mehrschichtigen extrudierten Kunststoffrohr vorgegebener Rohrwanddicke sowie mit vorgegebener Härte, Festigkeit, Bruchdehnung und Kerbschlagzähigkeit, welche Rohrleitung für eine vorgegebene Sollfunktion im gesamten Anwendungstemperaturbereich bis minus 40 °C eingerichtet ist und aus üblichem Rohrwandkunststoff besteht, als Kraftfahrzeug-Rohrleitung. Der Ausdruck Rohr umfaßt auch einen wenig flexiblen Schlauch. Die Sollfunktion ist beispielsweise die einer Kraftstoffleitung, einer Bremsleitung, einer Unterdruckleitung, einer Kühlwasserleitung, einer Steuerleitung oder dergleichen. Härte, Festigkeit, Bruchdehnung und Kerbschlagzähigkeit werden durch Auswahl des Rohrwandkunststoffes für die einschichtige oder mehrschichtige Rohrwand so eingerichtet, daß die Soll funktionen erfüllt werden. Härte, -Festigkeit, Bruchdehnung und Kerbschlagzähigkeit werden im folgenden auch als mechanische Qualitätsparameter bezeichnet. Typische Kraftfahrzeug-Rohrleitungen oder Kunststoffrohre für Kraftfahrzeug-Rohrleitungen sind z. B. beschrieben in DE 35 10 395, DE 37 15 251, DE 38 21 723 und DE 40 01 125. Die Kunststoffrohre solcher Kraftfahrzeug-Rohrleitungen erfahren im Zusammenhang mit der Extrusion regelmäßig auch eine Kalibrierung in besonderen, zumeist gekühlten Kalibrierwerkzeugen, z. B. im Wege einer sog. Vakuumkalibrierung.

Bei den bekannten Kraftfahrzeug-Rohrleitungen definiert die einschichtige oder mehrschichtige Rohrwand die mechanischen Qualitätsparameter, die regelmäßig den Anforderungen in hohem Maße genügen. Insoweit haben die bekannten Kraftfahrzeug-Rohrleitungen sich bewährt. Nichtsdestoweniger werden bei den üblichen fabrikmäßigen oder einbauseitig vorgenommenen Qualitätskontrollen Ausfallerscheinungen festgestellt, und zwar insbes. bei den tiefen Temperaturen von bis minus 40 °C. Die Ausfallerscheinungen bestehen in einem unkontrollierten Abfall der mechanischen Qualitätsparameter mit unkontrollierter Riß- oder Bruchbildung. In neuerer Zeit werden diese Ausfallerscheinungen darauf zurückgeführt (EP 0 245 125, Seite 2, Zeilen 16 bis 26), daß insbes. bei der Kalibrierung des Kunststoffrohres im Zuge der Extrusion eine Kalibrierungsorientierung in einer verhältnismäßig dünnen Oberflächenschicht von 20 bis 200 µm entsteht. Dabei werden vermutlich auch innere Spannungen eingefroren. Werden solche Kunststoffrohre in eine Kraftfahrzeug-Rohrleitung eingebaut, so können die Kalibrierungsorientierung und die damit verbundenen, korrelierten Phänomene, insbes. bei tiefen Temperaturen, die Ausfallerscheinungen auslösen. Um solche Ausfallerscheinungen zu verhindern, geht die herrschende Lehre heute dahin (EP 0 245 125, Seite 2, Zeile 37, bis Seite 4, Zeile 41), nach der Herstellung der Kunststoffrohre die eine Kalibrierungsorientierung aufweisende Oberflächenschicht aufzuschmelzen und danach einer Rekristallisation zu unterwerfen, wodurch die Kalibrierungsorientierung und die damit korrelierten Phänomene beseitigt werden. Das ist aufwendig und verlangt eine besondere Fertigungsstufe. Wo das Aufschmelzen der Oberflächenschicht durch eine Beaufschlagung mit Flammen erfolgt, kann je nach dem eingesetzten Werkstoff und der Sorgfalt bei der Beflammung nicht ausgeschlossen werden, daß störende chemische Reaktionen auftreten. In der Oberflächenschicht der üblichen Kunststoffrohre können Beschädigungen auftreten, an denen Kerbspannungen entstehen und von denen Rißbildungen ausgehen.

Der Erfindung liegt die Aufgabe zugrunde, eine Kraftfahrzeug-Rohrleitung, die den eingangs beschriebenen Aufbau aufweist und die beschriebenen Sollfunktionen erfüllt, zu verwenden, die von störenden Kalibrierungsorientierungen frei ist und einfach, ohne Aufschmelzen einer Oberflächenschicht, hergestellt werden kann.

Diese Aufgabe wird gelöst durch die Verwendung einer Rohrleitung aus einem einschichtigen oder einem mehrschichtigen extrudierten Kunststoffrohr vorgegebener Rohrwanddicke sowie mit vorgegebener Härte, Festigkeit, Bruchdehnung und Kerbschlagzähigkeit, welche Rohrleitung für eine vorgegebene Soll funktion im gesamten Anwendungstemperaturbereich bis minus 40 °C eingerichtet ist und aus üblichem Rohrwandkunststoff besteht, wobei auf die Außenfläche des Kunststoffrohres im Wege der Koextrusion bei der Herstellung des Kunststoffrohres eine für die Sollfunktion unerhebliche Relax-Kunststoffschicht stoffschlüssig aufgebracht ist, die im Vergleich zu dem Rohrwandkunststoff im gesamten Anwendungstemperaturbereich eine um einen Faktor von höchstens 0,8 geringere Härte aufweist und damit weich eingestellt ist, als im gesamten Anwendungstemperaturbereich von die Werte der Festigkeit, der Bruchdehnung und der Kerbschlagzähigkeit störend beeinflussenden Kalibrierungsorientierungen freie Kraftfahrzeug-Rohrleitung, mit der Maßgabe, daß die Dicke der Relax-Kunststoffschicht um einen Faktor von zumindest 0,5 geringer ist als die Rohrwanddicke der einschichtigen oder mehrschichtigen Rohrwand. - Die Erfindung betrifft grundsätzlich Kraftfahrzeug-Rohrleitungen, deren Kunststoffrohre auf bekannte Art und Weise hergestellt sind. Insoweit lassen sich die vorgegebenen und vorgeschriebenen mechanischen Qualitätsparameter auf bekannte Weise einrichten und kann insoweit auf bekannte Technologien zurückgegriffen werden. Es brauchen jedoch die herstellungsbedingten Kalibrierungsorientierungen nicht in Kauf genommen und nicht nachträglich beseitigt zu werden, weil sie gar nicht erst auftreten. Das beruht darauf, daß die im Wege der Koextrusion aufgebrachte dünne Relaxschicht aus weichem Kunststoff in der Außenschicht des eigentlichen Kunststoffrohres die Entstehung von Kalibrierungsorientierungen verhindert hat. Dabei kann dahingestellt bleiben, ob diese Relaxschicht selbst eine mehr oder weniger ausgeprägte Kalibrierungsorientierung aufweist. Infolge der Weichheit dieser Schicht können die Kalibrierungsorientierung und damit korrelierende Phänomene in der Relaxschicht die mechanischen Qualitätsparameter des eigentlichen Kunststoffrohres nicht beeinflussen. Darüber hinaus ist das eigentliche Kunststoffrohr durch die Relaxschicht schützend kaschiert. Mechanische Beschädigungen der Oberfläche eines erfindungsgemäßen, mit der Relaxschicht versehenen Kunststoffrohres betreffen regelmäßig nur die Relaxschicht und können daher in dem eigentlichen Kunststoffrohr Kerbspannungen oder andere Störungen nicht auslösen. Im einzelnen bestehen im Rahmen der Erfindung mehrere Möglichkeiten der weiteren Ausbildung und Gestaltung. Grundsätzlich kann auf die bekannten und bewährten Rohrwandkunststoffe zurückgegriffen werden, vorzugsweise auf einen Rohrwandkunststoff, wie er im Patentanspruch 2 spezifiziert ist. Dabei kann das Kunststoffrohr eine Wanddicke in dem in Anspruch 3 angegebenen Bereich aufweisen.

Da bei der erfindungsgemäßen Verwendung das eigentliche Kunststoffrohr zwar von den eingangs beschriebenen Mängeln befreit, im übrigen aber unverändert ist, können die üblichen mechanischen Qualitätsparameter eingehalten und sogar verbessert werden. Verbessert deshalb, weil die eine störende Kalibrierungsorientierung aufweisende Oberflächenschicht fehlt. Die mechanischen Qualitätsparameter im einzelnen können so gewählt werden, wie es der Patentanspruch 4 angibt.

Im Rahmen der Erfindung wird zweckmäßigerweise mit einer Relax-Kunststoffschicht entsprechend dem Patentanspruch 5 gearbeitet. Die Dicke der Relax-Kunststoffschicht soll in dem Bereich liegen, den der Patentanspruch 3 angibt.

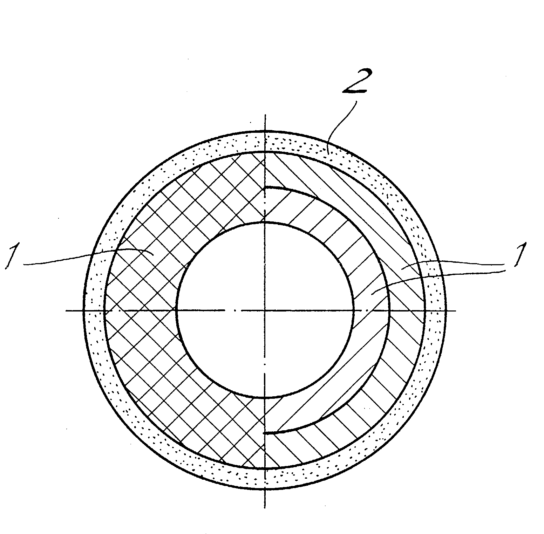

Im folgenden wird die Erfindung anhand einer lediglich ein Ausführungsbeispiel darstellenden Zeichnung ausführlicher erläutert. - Die einzige Figur zeigt in starker Vergrößerung einen Querschnitt durch eine erfindungsgemäße Kraftfahrzeug-Rohrleitung.

Die in der Figur dargestellte Kraftfahrzeug-Rohrleitung besteht aus einem im linken Teil der Figur einschichtigen, im rechten Teil der Figur mehrschichtigen Kunststoffrohr vorgegebener Rohrwanddicke mit vorgegebener Härte, Festigkeit, Bruchdehnung und Kerbschlagzähigkeit. Die Rohrleitung ist für eine der eingangs angegebenen Sollfunktionen eingerichtet, und zwar im gesamten Anwendungstemperaturbereich bis minus 40 °C. Sie besteht aus einem kraftfahrzeugüblichen Rohrwandkunststoff. Insoweit wird auch auf die eingangs angegebenen Literaturstellen verwiesen.

Auf die Oberfläche des eigentlichen Kunststoffrohres 1 ist im Wege der Koextrusion bei der Herstellung des Kunststoffrohres 1 eine Relax-Kunststoffschicht 2 stoffschlüssig aufgebracht. Darunter wird verstanden, daß der Anschluß ohne Schichtentrennung, gleichsam mit molekularer Verschmelzung, erfolgt. Die Relax-Kunststoffschicht 2 ist besonders eingestellt. Sie weist im Vergleich zu dem Rohrwandkunststoff im gesamten Anwendungstemperaturbereich eine geringere Härte auf und ist damit verhältnismäßig weich eingestellt. Insoweit wird auf den Patentanspruch 1 verwiesen. Aber auch die Dicke der Relax-Kunststoffschicht 2 ist besonders eingestellt. Sie ist geringer als es der Rohrwanddicke der einschichtigen oder mehrschichtigen Rohrwand des Kunststoffrohres 1 entspricht. Dadurch kann erreicht werden, daß das Kunststoffrohr 1 im gesamten Anwendungstemperaturbereich freigehalten ist von die Werte der Festigkeit, der Bruchdehnung und Kerbschlagzähigkeit störend beeinflussenden Kalibrierungsorientierungen der Moleküle. Die Relax-Kunststoffschicht darf nicht zu dünn sein, soll aber auch nicht zu dick sein, wozu auf den Patentanspruch 1 verwiesen wird. Die geeignete Dicke kann durch Versuche im Labor ohne weiteres festgestellt werden.

## Patentansprüche

1. Verwendung einer Rohrleitung aus einem einschichtigen oder einem mehrschichtigen extrudierten Kunststoffrohr (1) vorgegebener Rohrwanddicke sowie mit vorgegebener Härte, Festigkeit, Bruchdehnung und Kerbschlagzähigkeit, welche Rohrleitung für eine vorgegebene Sollfunktion im gesamten Anwendungstemperaturbereich bis minus 40 °C eingerichtet ist und aus kraftfahrzeugüblichem Rohrwandkunststoff besteht,
wobei auf die Außenfläche des Kunststoffrohres (1) im Wege der Koextrusion bei der Herstellung des Kunststoffrohres eine für die Soll funktion unerhebliche Relax-Kunststoffschicht (2) stoffschlüssig aufgebracht ist, die im Vergleich zu dem Rohrwandkunststoff im gesamten Anwendungstemperaturbereich eine um einen Faktor von höchstens 0,8 geringere Härte aufweist und damit weich eingestellt ist,
als im gesamten Anwendungstemperaturbereich von die Werte der Festigkeit, der Bruchdehnung und der Kerbschlagzähigkeit störend beeinflussenden Kalibrierungsorientierungen freie Kraftfahrzeug-Rohrleitung,
mit der Maßgabe, daß die Dicke der Relax-Kunststoffschicht (2) um einen Faktor von zumindest 0,5 geringer ist als die Rohrwanddicke der einschichtigen oder mehrschichtigen Rohrwand.

2. Verwendung nach Anspruch 1, mit der Maßgabe, daß das Kunststoffrohr (1) aus einem Rohrwandkunststoff der Gruppe PA 6, PA 66, PA 46, PA 69, PA 610, PA 612, PA 6-3T, PA 11, PA 12, beschrieben in DIN 16773 Teil 1, der Gruppe PP, beschrieben in DIN 16774, der Gruppe PET PBT, beschrieben in DIN 16779, der Gruppe Polyesterelastomere TEEE, beschrieben in ASTM D1972 oder kompatiblen Mischungen davon besteht.

3. Verwendung nach einem der Ansprüche 1 oder 2 mit der Maßgabe, daß das Kunststoffrohr (1) eine Wanddicke im Bereich von 0,5 bis 4 mm aufweist.

4. Verwendung nach einem der Ansprüche 1 bis 3 mit der Maßgabe, daß das Kunststoffrohr (1) aufweist:
eine Härte im Bereich von Shore D30 bis Shore D85,
eine Festigkeit im Bereich von 10N/mm² bis 60N/mm²,
eine Bruchdehnung im Bereich von 30 % bis 600 % und
eine Kerbschlagzähigkeit bei minus 40 °C von 2 kJ/m² bis nicht gebrochen
Härte definiert und gemessen nach DIN 53505, Festigkeit definiert und gemessen nach DIN 53455, Bruchdehnung definiert und gemessen nach DIN 53455, Kerbschlagzähigkeit definiert und gemessen nach ISO180/1A.

5. Verwendung nach einem der Ansprüche 1 bis 4 mit der Maßgabe, daß die Relax-Kunststoffschicht (2) aus einem Kunststoff der Gruppe PA 6, PA 66, PA 46, PA 69, PA 610, PA 612, PA 6-3T, PA 11, PA 12, beschrieben in DIN 16773 Teil 1, der Gruppe PP, beschrieben in DIN 16774, der Gruppe PET PBT, beschrieben in DIN 16779, der Gruppe Polyesterelastomere TEEE, beschrieben in ASTM D1972, oder kompatiblen Mischungen davon besteht und ihrerseits mit dem Rohrwandkunststoff kompatibel ausgewählt ist.

6. Verwendung nach einem der Ansprüche 3 bis 5 mit der Maßgabe, daß die Relax-Kunststoffschicht (2) eine Dicke im Bereich von 0,1 bis 0,2 mm aufweist.

## Claims

1. The use of a pipeline comprising a single-layer or multi-layer extruded synthetic material tube (1) of predetermined wall thickness and with a predetermined hardness, strength, ultimate elongation and notched-bar impact toughness, which pipeline is designed for a predetermined scheduled function over the entire temperature range of application down to minus 40°C, and which consists of tube wall synthetic material which is customary for motor vehicles,
wherein a relaxation synthetic material layer (2) which is unimportant to the scheduled function is applied, forming a material bond, to the external surface of the synthetic material tube (1) by a coextrusion route during the manufacture of the synthetic material tube, which relaxation synthetic material layer has a hardness over the entire temperature range of application which is lower than that of the tube wall synthetic material by a factor of 0.8 at most, and is thereby of soft construction,
as a motor vehicle pipeline which, over the entire temperature range of application, is free from sizing orientations which have an adverse effect on the values of strength, ultimate elongation and notched-bar impact toughness,
with the proviso that the thickness of the relaxation synthetic material layer (2) is less than the tube wall thickness of the single-layer or multi-layer tube wall by a factor of at least 0.5.

2. A use according to claim 1, with the proviso that the synthetic material tube (1) consists of a tube wall synthetic material of the group comprising PA 6, PA 66, PA 46, PA 69, PA 610, PA 612, PA 6-3T, PA 11, PA 12, described in DIN 16773, Part I, of the PP group described in DIN 16774, of the PET PBT group described in DIN 16779, of the TEEE polyester elastomer group described in ASTM D1972, or of compatible mixtures thereof.

3. A use according to either one of claims 1 or 2, with the proviso that the synthetic material tube (1) has a wall thickness within the range from 0.5 to 4 mm.

4. A use according to any one of claims 1 to 3, with the proviso that the synthetic material tube (1) has:
a hardness within the range from Shore D30 to Shore D85,
a strength within the range from 10 N/mm² to 60 N/mm²,
an ultimate elongation within the range from 30 % to 600 %, and
a notched-bar impact toughness at minus 40°C of 2 kJ/m² unbroken;
hardness defined and measured according to DIN 53505, strength defined and measured according to DIN 53455, ultimate elongation defined and measured according to DIN 53455, notched-bar impact toughness defined and measured according to ISO 180/1A.

5. A use according to any one of claims 1 to 4, with the proviso that the relaxation synthetic material layer (2) consists of a synthetic material of the group comprising PA 6, PA 66, PA 46, PA 69, PA 610, PA 612, PA 6-3T, PA 11, PA 12, described in DIN 16773, Part I, of the PP group described in DIN 16774, of the PET PBT group described in DIN 16779, of the TEEE polyester elastomer group described in ASTM D1972, or of compatible mixtures thereof, and is itself selected to be compatible with the tube wall synthetic material.

6. A use according to any one of claims 3 to 5, with the proviso that the relaxation synthetic material layer (2) has a wall thickness within the range from 0.1 to 0.2 mm.

## Revendications

1. Utilisation d'une conduite constituée d'un tuyau extrudé en matière plastique monocouche ou multicouche (1) possédant une épaisseur de paroi prédéfinie ainsi que des valeurs prédéfinies de dureté, de résistance mécanique, d'allongement à la rupture et de résistance au choc avec entaille, ladite conduite étant conçue pour une fonction théorique prédéfinie dans toute la plage des températures d'emploi jusqu'à - 40 °C et étant réalisée dans une matière plastique habituellement employée en automobile pour les parois de tuyaux, une couche de relaxation en matière plastique (2) sans incidence sur la fonction théorique étant déposée par conjugaison de matières sur la surface extérieure du tuyau en matière plastique (1) par voie de coextrusion lors de la fabrication du tuyau en matière plastique, présentant une dureté inférieure d'un facteur maximal de 0,8 par rapport à la matière plastique pour parois de tuyaux dans toute la plage des températures d'emploi et étant ainsi de conception tendre, ladite conduite étant utilisée comme conduite pour automobiles dépourvue d'orientations de calibrage affectant les valeurs de résistance mécanique, d'allongement à la rupture et de résistance au choc avec entaille dans toute la plage des températures d'emploi, avec la caractéristique selon laquelle l'épaisseur de la couche de relaxation en matière plastique (2) est inférieure d'un facteur d'au moins 0,5 à l'épaisseur de la paroi monocouche ou multicouche.

2. Utilisation selon la revendication 1, avec la caractéristique selon laquelle le tuyau en matière plastique (1) est réalisé dans une matière plastique pour parois de tuyaux du groupe PA 6, PA 66, PA 46, PA 69, PA 610, PA 612, PA 6-3T, PA 11, PA 12 décrit dans DIN 16773 1^{ère} partie, du groupe PP décrit dans DIN 16774, du groupe PET PBT décrit dans DIN 16779, du groupe élastomères polyester TEEE décrit dans ASTM D1972, ou dans des mélanges compatibles de ces matières.

3. Utilisation selon l'une des revendications 1 ou 2, avec la caractéristique selon laquelle le tuyau en matière plastique (1) possède une épaisseur de paroi comprise entre 0,5 et 4 mm.

4. Utilisation selon l'une des revendications 1 à 3, avec la caractéristique selon laquelle le tuyau en matière plastique (1) possède : une dureté comprise entre Shore D30 et Shore D85, une résistance mécanique comprise entre 10 N/mm² et 60 N/mm², un allongement à la rupture compris entre 30 % et 600 %, et une résistance au choc avec entaille à - 40 C de 2 kJ/m² sans rupture, la dureté étant définie et mesurée selon DIN 53505, la résistance mécanique étant définie et mesurée selon DIN 53455, l'allongement à la rupture étant défini et mesuré selon DIN 53455, la résistance au choc avec entaille étant définie et mesurée selon ISO 180/1A.

5. Utilisation selon l'une des revendications 1 à 4, avec la caractéristique selon laquelle la couche de relaxation en matière plastique (2) est réalisée dans une matière plastique pour parois de tuyaux du groupe PA 6, PA 66, PA 46, PA 69, PA 610, PA 612, PA 6-3T, PA 11, PA 12 décrit dans DIN 16773 1^{ère} partie, du groupe PP décrit dans DIN 16774, du groupe PET PBT décrit dans DIN 16779, du groupe élastomères polyester TEEE décrit dans ASTM D1972, ou dans des mélanges compatibles de ces matières, et est choisie, pour sa part, pour être compatible avec la matière plastique pour parois de tuyaux.

6. Utilisation selon l'une des revendications 3 à 5, avec la caractéristique selon laquelle la couche de relaxation en matière plastique (2) présente une épaisseur comprise entre 0,1 et 0,2 mm.
